# EUROPÄISCHE PATENTSCHRIFT

(11) **EP 0 634 088 B1**
(45) Veröffentlichungstag und Bekanntmachung des Hinweises auf die Patenterteilung: **06.08.1997**
(21) Anmeldenummer: 94109140.7
(22) Anmeldetag: 15.06.1994
(51) Int. Cl.: A01D 34/30, A01D 41/14

(54) **Mähdrescher**
Combine
Moissonneuse-batteuse

(30) Priorität: 13.07.1993 DE 4323393
(43) Veröffentlichungstag der Anmeldung: 18.01.1995
(73) Patentinhaber: CLAAS Kommanditgesellschaft auf Aktien, 33428 Harsewinkel (DE)
(72) Erfinder: Weitenberg, Ferdinand, D-59320 Ennigerloh (DE); Bussmann, Ralf, D-48336 Sassenberg (DE); Schulze, Andreas, D-59555 Lippstadt (DE)

(56) Entgegenhaltungen:
- CH-A- 399 044
- DE-A- 2 026 190
- DE-A- 3 830 908
- DE-C- 2 931 731

## Beschreibung

Die vorliegende Erfindung betrifft eine Erntemaschine insbesondere einen Mähdrescher mit einem vorn oder seitlichangeordneten Schneidwerk, welches eine Schneidwerksmulde und ein Messer aufweist, das aus zwei Messerteilen besteht, die mittels eines Messerantriebes und einer im Bereich der Trennstelle angeordneten Übertragungseinrichtung hin und her bewegbar und synchron antreibbar sind.

Damit ein Mähdrescher mit angebautem Schneidwerk während der Fahrt auf öffentlichen Straßen die zulässige Breite nicht überschreitet, ist es bekannt, das Schneidwerk in zwei Schneidwerkshälften zu teilen, um diese von der Arbeitsstellung in eine Stellung zu schwenken, in der die beiden Schneidwerkshälften parallel zueinander verlaufen.

Aus der DE-PS 29 31 731 ist es bekannt, zwei Messerteile mittels einer im Trennstellenbereich angeordneten Übertragungseinrichtung derart antriebsmäßig miteinander zu verbinden, daß nur ein Messerantrieb erforderlich ist. Diese Übertragungseinrichtung besteht aus zwei in der Arbeitsstellung ineinandergreifende Zahnsegmente, die um ortsfeste Punkte drehbar gelagert sind. Die Drehbewegung wird durch Hebel übertragen, die mit ihren den Festpunkten gegenüberliegenden Enden an den Trennstellenendbereichen der Messerteile angelenkt sind.

Bei dieser bekannten Messerkonstruktion ist es nachteilig, daß die Schneidwerkshälften vor dem Einschwenken in die Arbeitsstellung genau positioniert werden müssen, um zu *vermeiden, daß die Zähne des einen Zahnsegments auf die Zähne des* anderen Zahnsegmentes aufsetzen, wodurch zwangsläufig ein Bruch von Bauteilen hervorgerufen würde.

Es ist deshalb eine sorgfältige Beobachtung durch den Mähdrescherfahrer notwendig. Naturgemäß achtet jedoch der unter Zeitdruck stehende Mähdrescherfahrer beim Schwenken der Schneidwerkshälften in die Arbeitsstellung nicht darauf, so daß es über kurz oder lang zum Bruch mit einer anschließenden Reparatur kommen würde. Auch ist bei gegenläufig angetriebenen Messerstangen nicht auszuschließen, daß im Bereich der Trennstelle sogenannte Schneidlücken entstehen, ein sicherer flächendeckender Schnitt also nicht gewährleistet ist. Aus den vorgenannten Gründen wurde das vorbekannte Schneidwerk bislang bei einem Mähdrescher nicht eingesetzt, da es im Betrieb nicht praxisgerecht ist. Es wurden demzufolge immer zwei seitliche Antriebe für die Messerteile benötigt, wie sie beispielsweise aus der DE-OS 15 82 224 bekannt sind. Dadurch wird zwar ein praxisgerechter Antrieb für das Messer verwendet, der jedoch kostenintensiver ist. Darüberhinaus sind noch Doppelfinger zur Messerführung sowie mehrere besonders ausgebildete Klingen im Trennstellenbereich notwendig. Ferner ist es erforderlich, daß die Messerteile zusätzlich verriegelt werden.

Ausgehend von einem durch die DE-PS 29 31 731 bekannten Stand der Technik liegt der vorliegenden Erfindung die Aufgabe zugrunde, einen Mähdrescher der eingangs näher definierten Art so auszubilden, daß beim Schwenken der Schneidwerkshälften in die Arbeitsstellung die Messerteile des Messers selbsttätig und positionsgerecht gekoppelt werden, ohne daß der Mähdrescherfahrer auf die funktionsgerechte Positionierung der Bauteile der Übertragungseinrichtung achten muß. Darüberhinaus soll die Konstruktion vereinfacht werden.

Diese Aufgabe wird dadurch gelöst, daß jede Übertragungseintrichtung zwei als zweiarmige Hebel
ausgebildete Schwinghebel aufweist, die im mittleren Bereich auf senkrecht und im Abstand zur Bewegungsebene der Messerteile stehenden Lagerbolzen frei drehbar gelagert sind, daß in jedem Messerteil auf aufragender Zapfen in einem relativ geringen Abstand zur Trennstelle fest angeordnet ist, der in ein Langloch des zugehörigen Schwinghebels eingreift und daß die einander zugewandten Flächen der Schwinghebel in beiden Endbereichen als stets einander berührende Abwälzflächen ausgebildet sind. Eine derartige Zweiteilung eines Messers kann auch vorteilhaft bei einem einteiligen sehr breiten Mähtisch verwendet werden, da hierdurch zum einen der Messeraufbau selbst und zum anderen der Austausch von Messern einfach gestaltet werden kann.

Da nunmehr die Übertragung der hin- und hergehenden Bewegung des angetriebenen Messerteils bei beiden Bewegungsrichtungen über die Schwinghebel erfolgt, die sich stets an definierten Stellen gegeneinander abwälzen, entfallen ineinandergreifende Verzahnungen. Da sie in Kontakt stehen, erfolgt sinngemäß eine Zwangspositionierung des durch die Übertragungseinrichtung mitgenommenen Messerteils, wenn die Schneidwerkshälften die Arbeitsstellung erreichen. Die Lagerung der Schwinghebel ist äußerst einfach, da lediglich in den Boden der Schneidwerksmulde zwei Lagerbolzen lagegerecht eingesetzt werden müssen. Ferner ist es noch erforderlich, daß in die beiden Messerteile in einem geringen Abstand zur Trennstelle die Zapfen eingesetzt werden, die in die Langlöcher eingreifen. Zweckmäßigerweise erstrecken sich die Lagerbolzen und die Zapfen nach oben.
Es ist vorteilhaft, daß im Trennstellenbereich Sonderausführungen der Finger entfallen.
In weiterer Ausgestaltung ist vorgesehen, daß die Schwinghebel baugleich sind, und daß ihre Drehpunkte auf der die Symmetrieachse kreisenden Querachse liegen. Durch die baugleiche und symmetrische Gestaltung ist der Austauch der Schwinghebel untereinander möglich. Unter der Symmetrieachse wird die Achse verstanden, die in der Mittelstellung des Messers parallel zu den zugewandten Kanten des Messers steht.
Damit die synchrone Bewegung der Messerteile gewährleistet ist, stimmen die Abstände der beiden Lagerbolzen und die aufragenden Zapfen der Messerteile überein.

Damit die sich berührenden Flächen der Schwinghebel widerstandsfrei auf einander abrollen können, ist vorgesehen, daß die einander gegenüberliegenden Endbereiche jedes Schwinghebels an den zugewandten Eckbereichen zur Bildung der Wälzflächen bogenförmig ausgebildet sind, wobei die zwischen den Wälzflächen liegenden Innenflächen in Richtung zum Lagerbolzen zurück versetzt sind.

Auf vorteilhafte Weise erstrecken sich die in den dem Messer zugewandten Stirnendbereichen vorgesehenen Langlöcher der Schwinghebel über eine vorgegebene Tiefe, wobei sie nach unten offen sind. Die Langlöcher sind dann wie Nuten oder Taschen zu sehen, so daß sie von oben gegen Verschmutzung geschützt sind. Weitere vorteilhafte Merkmale ergeben sich aus den weiteren Unteransprüchen.

Im folgenden soll die Erfindung anhand eines Ausführungsbeispiels und mehrerer dieses schematisch darstellender Figuren näher erläutert werden. Dabei zeigt:
- Figur 1:: eine Vorderansicht auf das Schneidwerk eines erfindungsgemäßen Mähdreschers in Arbeitsstellung,
- Figur 2:: eine der Figur 1 entsprechende Darstellung jedoch in einer Zwischenstellung des Schneidwerkes,
- Figur 3:: eine Draufsicht auf das Schneidwerk in der Fahrtstellung,
- Figur 4:: eine Teil-Draufsicht auf das Schneidwerk mit der Trennstelle und
- Figur 5:: einen Teil-Längsschnitt, welche die Anordnung des Schwinghebels zeigt.

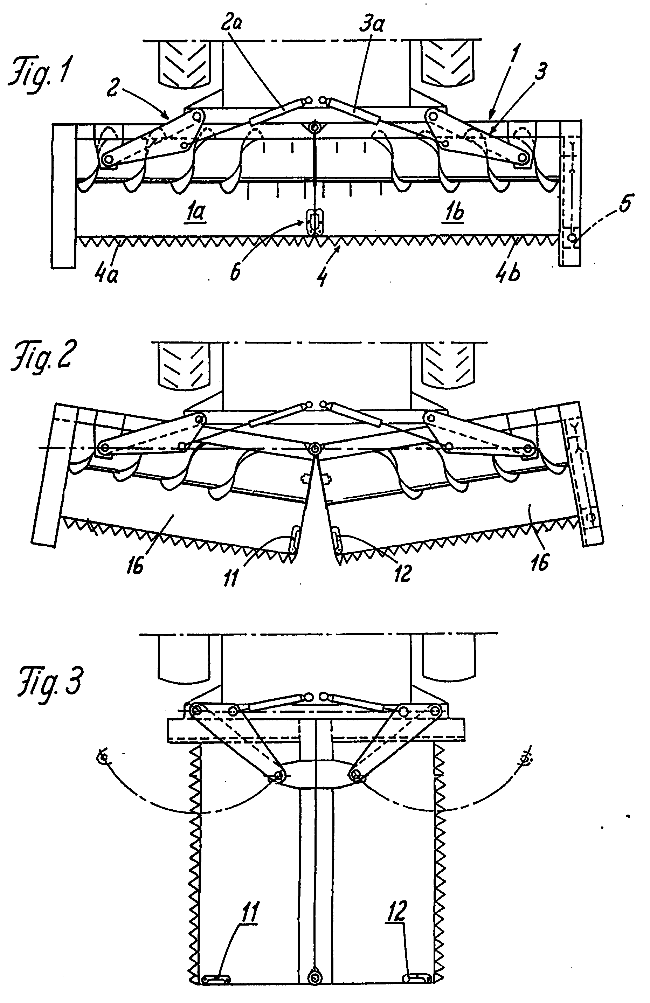

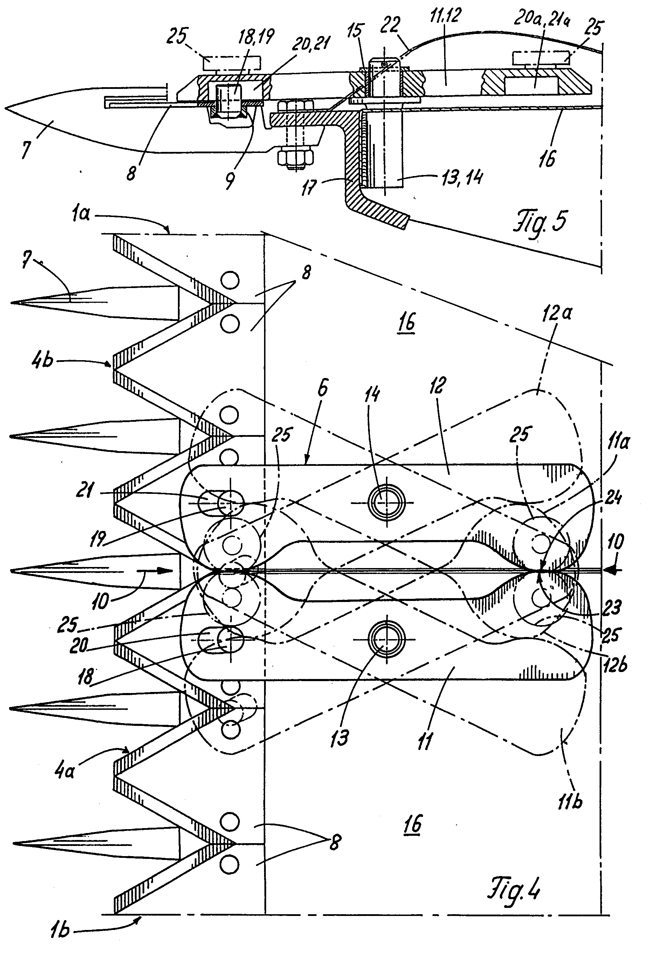

Der in den Figuren 1 bis 3 andeutungsweise dargestellte Mähdrescher ist mit einem Schneidwerk 1 ausgerüstet, welches aus den beiden Schneidwerkshälften 1a und 1b besteht. Jede Schneidwerkshälfte 1a und 1b ist von der in der Figur 1 dargestellten Arbeitsstellung über eine Zwischenstellung gemäß der Figur 2 in einer in der Figur 3 dargestellte Fahrtstellung schwenkbar. Dazu ist jede Schneidwerkshälfte 1a bzw. 1b an einem Gestänge 2, 3 aufgehängt, das von einem Hydraulikzylinder 2a, 3a betätigt wird. Das Schneidwerk 1 ist mit einem Messer 4 ausgerüstet, welches von einem in Vorwärtsfahrtrichtung gesehen, an der linken Seite angeordneten Antrieb 5, beispielsweise einem Taumelscheibenantrieb, oszilierend angetrieben ist. Das Messer 4 besteht aus den beiden Messerteilen 4a und 4b, die in der Figur 1 dargestellten Arbeitsstellung über eine in den Figuren 4 und 5 genauer dargestellte Übertragungseinrichtung 6 synchron antreibbar gekoppelt sind.

Die Figur 4 zeigt, daß die Messerteile 4a und 4b in einem sich über die Breite des Schneidwerkes erstreckenden Mähbalken geführt sind, in dem die Finger 7 im gleichmäßigen Abstand über die gesamte Breite verteilt befestigt sind. Die Klingen 8 der Messerteile 4a und 4b sind an einem Messerrücken 9 (Figur 5) mit flachem Querschnitt befestigt. Die Trennstelle der Schneidwerkshälften 1a und 1b ist durch die beiden Pfeile 10 gekennzeichnet. Die Übertragungseinrichtung 6 besteht aus zwei baugleichen Schwinghebeln 11 und 12, die auf zwei im Abstand zueinander und im Abstand zum Messer 4 stehenden Lagerbolzen 13 und 14 frei drehbar gelagert und durch Sicherungsringe 15 gegen axiale Verschiebung gesichert sind. Die Lagerbolzen 13 und 14 sind an den beiden Böden 16 der Schneidwerksmulden der Schneidwerkshälften 1a und 1b in den einander zugewandten Randbereichen, bezogen auf die Arbeitsstellung, festgelegt. Außerdem sind sie mit einem vorderen Verstärkungsprofil 17 verschweißt, an dem auch die Finger 7 angeschraubt sind. An beiden Messerteilen 4a und 4b sind in den einander zugewandten Endbereichen im gleichen Abstand zur Trennstelle zwei nach oben gerichtete Zapfen 18 und 19 befestigt, die in Langlöcher 20 und 21 oder in nach unten offene Nuten der Schwinghebel 11, 12 eingreifen. Der Abstand der Lagerbolzen 13, zu 14 stimmt mit dem Abstand der Zapfen 18 zu 19 überein. Die Schwinghebel 11 und 12 sind baugleich und aus Flachstahlabschnitten gefertigt. In der in der Figur 4 in Vollinien gezeichnete Mittelstellung ist die parallel zum Messer 4 stehende durch den Drehpunkt verlaufende Querachse die Symmetrieachse. Die dem Messer 4 abgewandt liegenden Langlöcher 20 a und 21 a werden benutzt, wenn die beiden Schwinghebel 11 und 12 gegeneinander ausgetauscht werden. Die Stirnendbereiche jedes Schwinghebels 11 und 12 sind in den einander zugewandten Eckbereichen bogenförmig ausgebildet, so daß die einander berührenden Flächen (23,24) widerstandslos aufeinander abrollen können. Die mittleren Bereiche der einander zugewandten Innenflächen der Schwinghebel 11 und 12 verspringen in Richtung zu dem jeweiligen Lagerbolzen 13 bzw. 14, damit ein Abrollen der Schwinghebel 11 und 12 beim Verfahren des Messers in die linke und rechte Endstellung gewährleistet ist. Die Figur 4 zeigt noch, daß an dem vorderen Verstärkungsprofil 17 ein Abdeckblech 22 befestigt ist, welches zumindest den hinteren Bereich jedes Schwinghebels 11 und 12 übergreift.

Wird das linke Messerteil 4a mittels des Antriebes von den in der Figur 4 in Vollinien dargestellten Mittelstellung in die äußere linke Endstellung gezogen, werden die beiden Schwinghebel 11 und 12 entgegen dem Uhrzeigersinn im Synchronlauf in die in strichpunktieren Linien dargestellten Endstellungen 11a und 12a geschwenkt, da der in Fahrtrichtung linke Schwenkhebel 11 mit seinem dem Messer 4 abgewandten Stirnbereich den Schwinghebel 12 berührt und ihn synchron verdreht. Wird die Bewegungsrichtung des Messerteils 4a umgekehrt, drückt der im Uhrzeigersinn geschwenkte Schwinghebel 11 mit seinem dem Messer 4 zugewandten Stirnendbereich den berührenden Schwinghebel 12 ebenfalls im Uhrzeigersinn in die entgegengesetzte Endstellung. Diese ebenfalls in strichpunktierten Linien dargestellten Endstellungen der Schwinghebel 11 und 12 sind durch die Bezugszeichen 11b und 12b gekennzeichnet. Die Mitnahme des rechten Messerteils 4b erfolgt in Anhängigkeit von der Bewegungsrichtung des Messerteils 4a durch eine der bogenförmigen Abwälzflächen 23, 24 des Schwinghebels 11. In Ausgestaltung der Erfindung können die endseitigen Abwälzflächen 23,24 auch Außenringflächen von mit den Schwinghebeln 11, 12 verbundenen Radiallagern 25 sein.

### Bezugszeichenübersicht

- 1: Schneidwerk
- 1 a, b: Schneidwerkhälften
- 2: Gestänge
- 3: Gestänge
- 2 a: Hydraulikzylinder
- 3 a: Hydraulikzylinder
- 4: Messer
- 5: Antrieb
- 4 a, b: Messerteile
- 6: Übertragungseinrichtung
- 7: Finger
- 8: Klingen
- 9: Messerrücken
- 10: Pfeilde
- 11: Schwinghebel
- 12: Schwinghebel
- 13: Lagerbolzen
- 14: Lagerbolzen
- 15: Sicherungsringe
- 16: Böden
- 17: Verstärkungsprofil
- 18: Zapfen
- 19: Zapfen
- 20: Langlöcher
- 21: Langlöcher
- 20 a: Langlöcher
- 21 a: Langlöcher
- 22: Abdeckblech
- 23: Flächen
- 24: Flächen
- 25: Radiallager

## Patentansprüche

1. Erntemaschine mit frontseitig oder seitlich angebautem, Schneidwerk, welches eine Schneidwerksmulde und ein Messer (4) aufweist, daß aus zwei, den Schneidwerkshälften zugeordneten Messerteilen (4a, 4b) besteht, die mittels eines einzigen seitlichen Messerantriebs (5) und einer im Bereich der Trennstelle angeordneten Übertragungseinrichtung (6) hin- und hergehend und synchron antreibbar sind,
**dadurch gekennzeichnet**,
daß die Übertragungseinrichtung (6) zwei als doppelarmige Hebel ausgebildete Schwinghebel (11,12) aufweist, die im mittleren Bereich auf senkrecht und im Abstand zur Bewegungsebene der Messerteile (4a, 4b) stehenden Lagerbolzen (13,14) frei drehbar gelagert sind, daß in jedem Messerteil (4a, 4b) ein aufragender Zapfen, (18, 19) in einem relativ geringen Abstand zur Trennstelle fest angeordnet ist, der in ein Langloch (20, 21) des zugehörigen Schwinghebels (11, 12) eingreift, und daß die einander zugewandten Flächen (23,24) der Schwinghebel (11, 12) in beiden Endbereichen als stets einander berührende Abwälzflächen ausgebildet sind.

2. Mähdrescher nach Anspruch 1,
**dadurch gekennzeichnet**,
daß die Schwinghebel (11,12) baugleich sind, und daß ihre Drehpunkte auf einer die Symmetrieachse kreisenden Querachse liegen,

3. Mähdrescher nach Anspruch 2,
**dadurch gekennzeichnet**,
daß der Abstand der Lagerbolzen (13, 14) mit dem Abstand der aufragenden Zapfen (18, 19) der Messerteile (4a und 4b) übereinstimmt.

4. Mähdrescher nach Anspruch 1,
**dadurch gekennzeichnet**,
daß die einander gegenüberliegenden Endbereiche eines jeden Schwinghebels (11, 12) an den zugewandten Eckbereichen zur Bildung der Wälzflächen (23,24) bogenförmig ausgebildet sind, wobei die zwischen den Wälzflächen liegenden Innenflächen in Richtung zu den Lagerbolzen (13, 14) versetzt sind.

5. Mähdrescher nach Anspruch 1 bis 4
**dadurch gekennzeichnet**,
daß die einander berührenden Abwälzflächen (23, 24) des Schwinghebelpaares (11, 12) abriebfest vergütet sind.

6. Mähdresch nach Anrpuch 1 bis 3
**dadurch gekennzeichnet**,
daß das Schwinghebelpaar (11, 12) an seinen Kontaktenden mit Radiallagern (25) versehen ist, deren Außenringflächen die Abwälzflächen bilden.

7. Mähdrescher nach Anspruch 4,
**dadurch gekennzeichnet**,
daß die einander abgewandten äußeren Flächen der Schwinghebel (11, 12) geradlinienig ausgebildet sind.

8. Mähdrescher nach einem oder mehreren der vorhergehenden Ansprüche,
**dadurch gekennzeichnet**,
daß die in den Stirnendbereichen der Schwinghebel (11 und 12) vorgesehenen Langlöcher (20, 21) sich über eine vorgegebene Tiefe erstrecken und nach unten offen sind.

## Claims

1. A harvester having a cutting mechanism which is attached at the front or laterally and which has a cutting mechanism tray and a blade (4) comprising two blade portions (4a, 4b) which are associated with the cutting mechanism halves and which are reciprocably and synchronously drivable by means of a single lateral blade drive (5) and a transmission device (6) arranged in the region of the separation location, characterised in that the transmission device (6) has two pivotal levers (11, 12) which are in the form of double-armed levers and which are freely rotatably mounted in the central region on mounting pins (13, 14) which are disposed vertically and at a spacing relative to the plane of movement of the blade portions (4a, 4b), that fixedly arranged in each blade portion (4a, 4b) at a relatively small spacing relative to the separation location is an upstanding projection (18, 19) which engages into a slot (20, 21) in the associated pivotal lever (11, 12), and that the mutually facing surfaces (23, 24) of the pivotal levers (11, 12), in both end regions, are in the form of rolling surfaces which are always in contact with each other.

2. A combine harvester according to claim 1 characterised in that the pivotal levers (11, 12) are of identical construction and that their pivot points are on a transverse axis which circles the axis of symmetry.

3. A combine harvester according to claim 2 characterised in that the spacing of the mounting pins (13, 14) is the same as the spacing of the upstanding projections (18, 19) of the blade portions (4a and 4b).

4. A combine harvester according to claim 1 characterised in that the mutually oppositely disposed end regions of each pivotal lever (11, 12) are of an arcuate configuration at the facing corner regions to form the rolling surfaces (23, 24), wherein the inside surfaces which are between the rolling surfaces are displaced in a direction to the mounting pins (13, 14).

5. A combine harvester according to claims 1 to 4 characterised in that the mutually contacting rolling surfaces (23, 24) of the pair of pivotal levers (11, 12) are treated to make them abrasion-resistant.

6. A combine harvester according to claims 1 to 3 characterised in that at their contact ends the pair of pivotal levers (11, 12) is provided with radial bearings (25), the outer race surfaces of which form the rolling surfaces.

7. A combine harvester according to claim 4 characterised in that the mutually remote outer surfaces of the pivotal levers (11, 12) are of a straight configuration.

8. A combine harvester according to one or more of the preceding claims characterised in that the slots (20, 21) in the end regions of the pivotal levers (11 and 12) extend over a predetermined depth and are open downwardly.

## Revendications

1. Machine de récolte avec un système de coupe monté frontalement ou latéralement, comprenant un auget de vis d'alimentation et une lame (4) composée de deux parties de lame (4a, 4b) qui sont associées aux moitiés de système de coupe et qui sont entraînées en va-et-vient, en synchronisme, au moyen d'une commande de lame (5) latérale unique et d'un dispositif de transmission (6) disposé dans la zone de l'emplacement de division, **caractérisée** par le fait que le dispositif de transmission (6) comprend deux leviers oscillants (11, 12) réalisés sous forme de leviers à deux bras et montés en rotation libre, dans leur zone médiane, sur des pivots (13, 14) disposés perpendiculairement et à distance par rapport au plan de mouvement des parties de lame (4a, 4b), qu'à chaque partie de lame (4a, 4b) est fixé, à une distance relativement faible de l'emplacement de division, un doigt (18, 19) en saillie vers le haut, pénétrant dans un trou oblong (20, 21) du levier oscillant (11, 12) correspondant, et que les surfaces en regard (23, 24) des leviers oscillants (11, 12), dans les deux zones d'extrémité de ces derniers, sont réalisées sous forme de surfaces de roulement en contact réciproque permanent.

2. Machine suivant la revendication 1, **caractérisée** par le fait que les leviers oscillants (11, 12) sont de conformation identique et d'agencement symétrique, et que leurs axes de rotation sont situés sur un axe transversal coupant l'axe de symétrie.

3. Machine suivant la revendication 2, **caractérisée** par le fait que la distance entre les pivots (13, 14) correspond à la distance entre les doigts (18, 19) saillants des parties de lame (4a, 4b).

4. Machine suivant la revendication 1, **caractérisée** par le fait que les zones d'extrémité, en regard l'une de l'autre, des deux leviers oscillants (11, 12) sont conformées en arc dans les zones des angles en regard, pour former les surfaces de roulement (23, 24), les surfaces intérieures situées entre les surfaces de roulement étant décalées en direction des pivots (13, 14).

5. Machine suivant la revendication 1 à 4, **caractérisée** par le fait que les surfaces de roulement (23, 24), en contact réciproque, de la paire de leviers oscillants (11, 12) sont traitées de manière à résister à l'usure.

6. Machine suivant la revendication 1 à 3, **caractérisée** par le fait que la paire de leviers oscillants (11, 12) comporte, à ses extrémités de contact, des roulements (25) à charge radiale dont les bagues extérieures constituent les surfaces de roulement.

7. Machine suivant la revendication 4, **caractérisée** par le fait que les surfaces extérieures des leviers oscillants (11, 12), éloignées l'une de l'autre, sont rectilignes.

8. Machine suivant une ou plusieurs des revendications précédentes, **caractérisée** par le fait que les trous oblongs (20, 21) prévus dans les zones d'extrémités frontales des leviers oscillants (11, 12) s'étendent sur une profondeur prédéterminée et débouchent vers le bas.
